Europäisches Patentamt

European Patent Office

Office européen des brevets

(19)

(11) Publication number: **0 167 368 B1**

# EUROPEAN PATENT SPECIFICATION

(12)

(45) Date of publication of patent specification: **08.04.92**  (51) Int. Cl.⁵: **G02F  1/133**, B60Q 3/04

(21) Application number: **85304642.3**

(22) Date of filing: **28.06.85**

(54) **Liquid crystal display device.**

(30) Priority: **30.06.84 JP 135398/84**

(43) Date of publication of application:
**08.01.86 Bulletin  86/02**

(45) Publication of the grant of the patent:
**08.04.92 Bulletin  92/15**

(84) Designated Contracting States:
**BE DE FR GB IT SE**

(56) References cited:
**WO-A-83/03013**
**GB-A- 2 121 583**
**US-A- 4 042 294**
**US-A- 4 294 517**
**US-A- 4 357 061**

**PATENT ABSTRACTS OF JAPAN, vol. 8, no.
144 (P-284)(1581), 5 July 1984 & JP A
59044027**

(73) Proprietor: **Nippon Seiki Co. Ltd.**
**2-2-34, Higashi Zaoh**
**Nagaoka-city Niigata-pref(JP)**

(72) Inventor: **Yasuhara, Isao**
**10, Koshoji-Machi 3-Banchi**
**Nagaoka City Niigata-Pref.(JP)**
Inventor: **Tamura, Norihiro**
**525, Ohaza-Nakazawa Koshiji-machi**
**Santou-gun Niigata-Pref.(JP)**

(74) Representative: **Votier, Sidney David et al**
**CARPMAELS & RANSFORD 43, Bloomsbury
Square**
**London WC1A 2RA(GB)**

## Description

This invention relates to a liquid crystal display device which may be used in the instrument display means of a vehicle. More particularly the invention relates to a structure for mounting a liquid crystal element including liquid crystal cells having a liquid crystal enclosed therein, an illuminating member located behind the liquid crystal element for transmitting light to the liquid crystal element, for instance at night, and a circuit board located behind the illuminating member and having thereon a circuit for driving the liquid crystal element.

Liquid crystal display devices wherein transmission of light is controlled by application of a potential causing a change in the arrangement of molecules of a liquid crystal to indicate a symbol such as a character or a numeral in accordance with the configuration of an electrode are conventionally used as display devices for instruments of vehicles such as automobiles and motor cycles. Display devices of this type are disclosed, for example, in US-A-4,012,117 and US-A-4,011,001. Those display devices commonly include, as components thereof, a liquid crystal element including liquid crystal cells having a liquid crystal enclosed between two glass plates and, when necessary, a polaroid plate, electrodes provided for the liquid crystal cells for driving the liquid crystal with signal potentials, an illuminating member located behind the liquid crystal element, a circuit board located behind the illuminating member and having thereon a circuit for providing signal potentials to the electrodes and conducting members connecting the electrodes and the circuit of the circuit board. Thus, since those devices include a large number of components, they have the drawback that it takes a long time to assemble such components, resulting in low productivity.

Particularly, care must be taken to arrange conducting members so as to maintain accurate and stable electric connections between terminals for the electrodes of the liquid crystal cells and terminals on the circuit board. There is the possibility that they may be displaced by some slight vibrations even during a carefully controlled assembly operation, resulting in no indication or indication in error by the liquid crystal element. In order to eliminate such troubles, great care must be taken in the assembly operations, and hence such operations will not make good progress, resulting in difficulty in improvement in productivity.

Liquid crystal display devices of another type are also known. These include, as a foundation piece in assembly, a light transmissive member for transmitting light such that light from a light source may be transmitted to a liquid crystal element. The liquid crystal element and a holding member for holding the liquid crystal element from its front side are securely positioned on the front side of the light transmissive member while a circuit board is securely positioned on the rear side of the light transmissive member. Conducting members are disposed in through-holes formed in circumferential portions of the light transmissive member. Such liquid crystal display devices are disclosed, for example, in US-A-4,247,928 and GB-A-2121583. However, in this type, since the light transmissive member serves as a member for illuminating and also as a member for securing a liquid crystal element or the like, its configuration becomes large and complicated, resulting in an increase in thickness of the entire liquid crystal display device. In addition, this leads to complexity in the design and manufacture of a metal mold. Accordingly, it is difficult for such a liquid crystal display device to assume a configuration desirable for providing uniform illumination which is an essential role of the light transmissive member.

It is an object of the present invention to provide a liquid crystal display device which can be assembled with ease and accuracy and is simple in shapes of components.

According to the present invention, there is provided a liquid crystal display device comprising a box-shaped securing member serving as a foundation piece for assembly of the device and having a penetrating portion at a peripheral portion thereof;

a liquid crystal element in which the directions of arrangement of the molecules of the liquid crystal vary in response to the application of signal potentials for controlling transmission of light to effect indication;

a holding member, disposed on the side of said liquid crystal element remote from said securing member, for holding said liquid crystal element on said securing member;

a circuit board, on which is provided a drive circuit for outputting signal potentials for controlling said liquid crystal element, said circuit board being disposed on the side of said securing member remote from said liquid crystal element; and

a conducting member;

said circuit board and holding member being secured to said securing member so that said conducting member establishes electrical connection between said liquid crystal element and said circuit board;

characterised by an illuminating member arranged on one side of said securing member, in layered relationship with said liquid crystal element, and said conducting member being located in said penetrating portion of said securing member.

A preferred embodiment of the present invention will be described in detail, by way of example only, with reference to the accompanying drawings, in which:

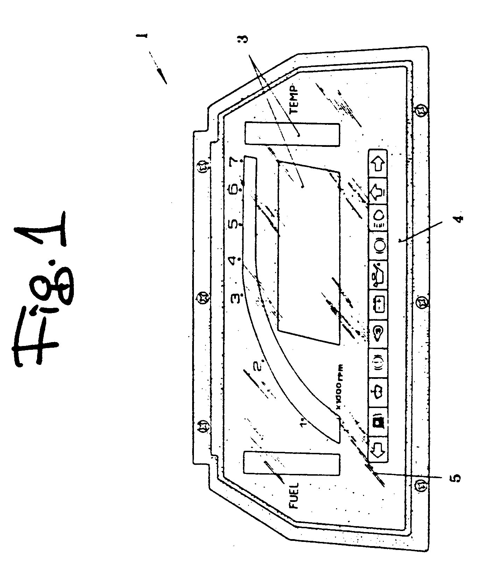

Fig. 1 is a front elevational view of a liquid crystal meter apparatus for a vehicle including a display device according to the present invention:

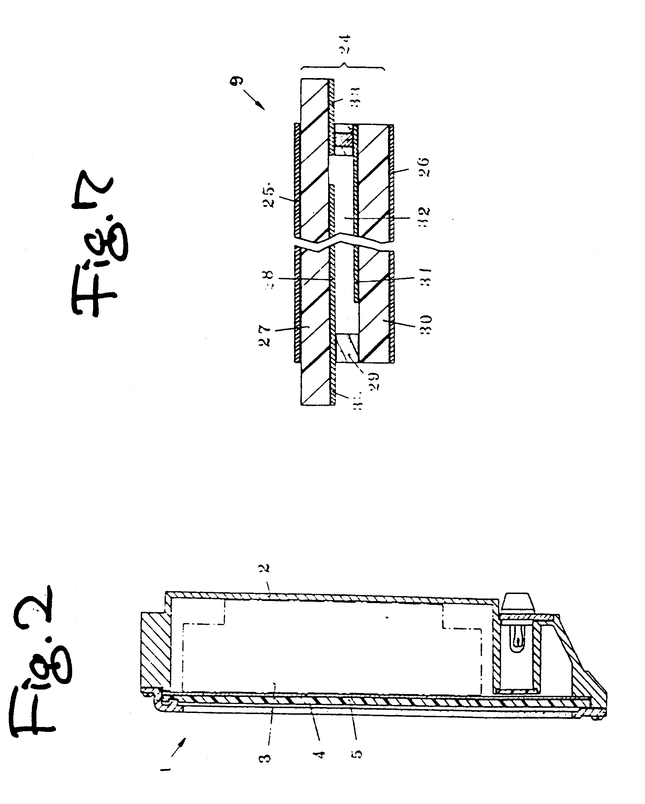

Fig. 2 is a cross sectional view of the liquid crystal meter apparatus of Fig. 1;

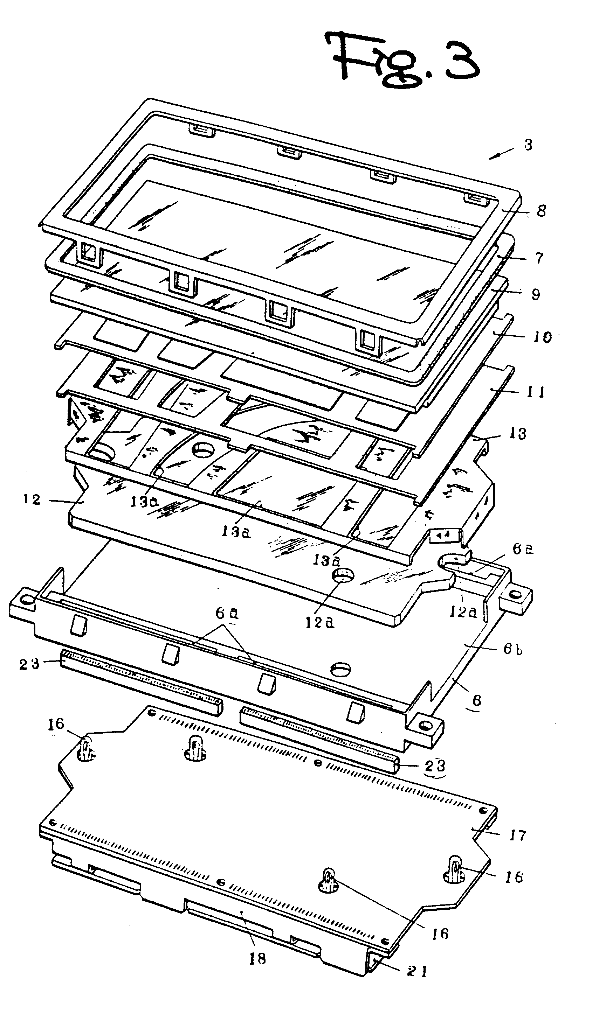

Fig. 3 is an exploded perspective view of the liquid crystal display device employed in the liquid crystal meter apparatus of Fig. 1;

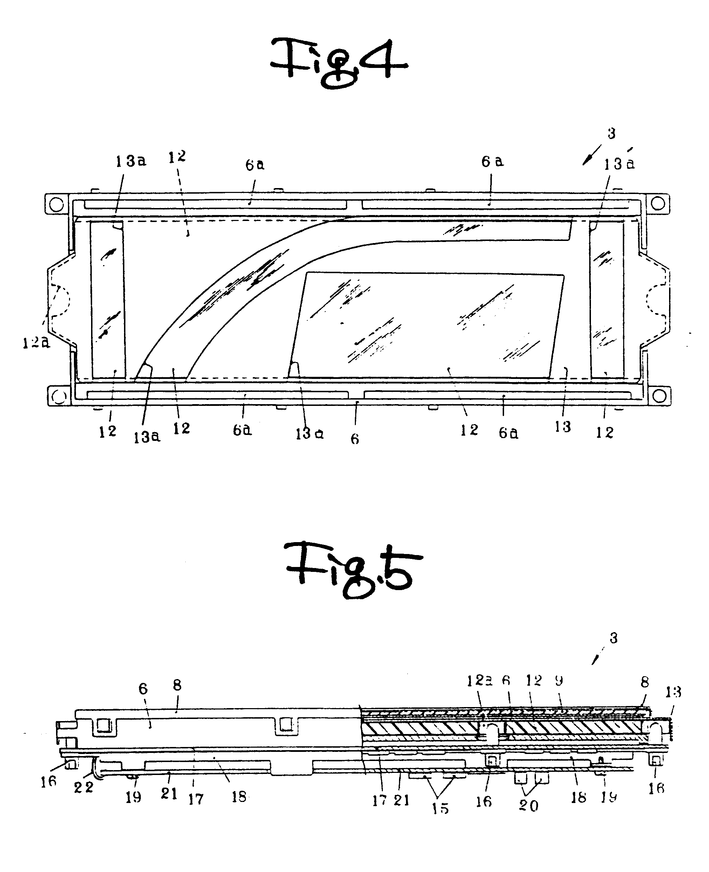

Fig. 4 is a front elevational view of the liquid crystal display device of Fig. 3;

Fig. 5 is a view from above, partly in cross section, of the liquid crystal display device of Fig. 4;

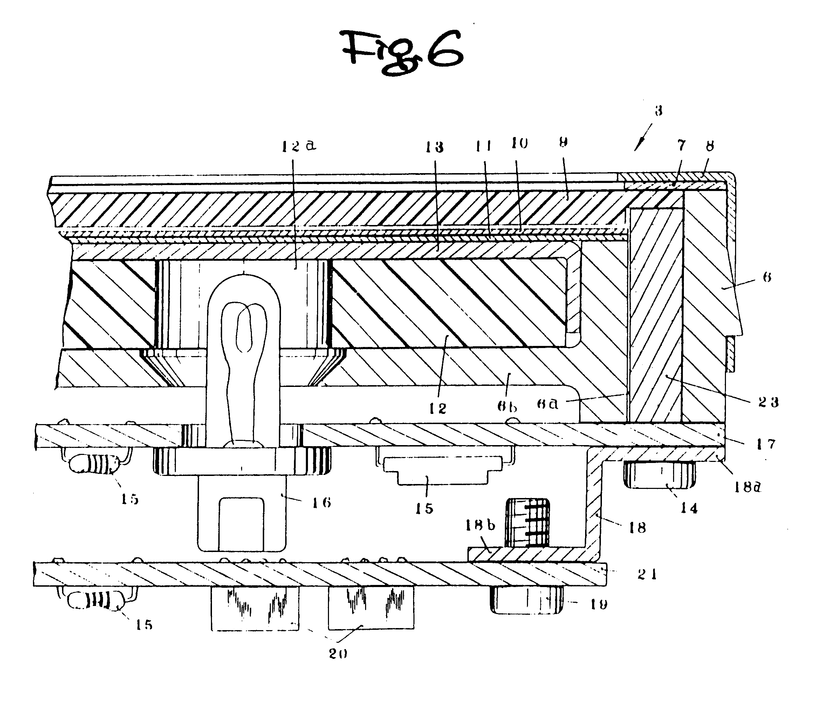

Fig. 6 is an enlarged cross sectional view of part of the liquid crystal display device of Fig. 3; and

Fig. 7 is a cross sectional view of the liquid crystal element employed in the liquid crystal display device of Fig. 3.

Reference numeral 1 designates a liquid crystal meter apparatus having a liquid crystal display device 3 according to the present invention securely contained in a meter case 2. A mask plate 4 is located in front of the liquid crystal display device 3 and is formed from a polycarbonate resin plate or the like which is colored to cover and hide portions in the meter case 2 unnecessary for indication. A front panel 5 is formed from a light transmissive acrylic resin plate or the like and is located in front of the mask plate 4 for covering the front of the meter case 2. The front panel 5 has indicia such as characters or graduations printed on a rear face thereof.

The liquid crystal display device 3 includes a securing member 6 in the form of a bottomed box made of a polycarbonate resin or the like and serving as a foundation piece for components. A liquid crystal element 9 is placed on and secured to the front face of the securing member 6 by means of a cell holder 8, serving as a holding member, which is made of iron or the like. The cell holder 8 presses at least against peripheral portions of the liquid crystal element 9 from its front with a rubber packing 7 interposed therebetween. A semitransmissive reflecting plate 10 is located on the rear face of the liquid crystal element 9 and includes a filter element which is colored in accordance with indicating portions of the liquid crystal element 9. A heat insulating member 11 is interposed between the reflecting plate 10 and the securing member 6 and is formed from a sheet of glass fiber containing paper which is cut away at portions thereof in correspondence with the indicating portions of the liquid crystal element 9. A light transmissive member 12 in the form of a flat plate is interposed between the heat insulating member 11 and the securing member 6 and is formed from an acrylic resin plate or the like. The light transmissive member 12 has a light intake portion 12a in at least a portion of a side face thereof, the light transmissive member 12 constituting an illuminating member for taking in light from a light source which will be hereinafter described to illuminate the liquid crystal element 9. A heat radiating member 13 formed from an aluminum plate or the like covers the front face of the light transmissive member 12 forwardly of the light source and has portions of a region thereof which covers the front face of the light transmissive member 12 cut away in correspondence with the indicating portions of the liquid crystal element 9 while another portion thereof is exposed outside. The heat radiating member 13 cooperates with the securing member 6 to position the light transmissive member 12. A first circuit board 17 is secured to the rear face of the securing member 6 by means of screws 14 or the like and has thereon a drive circuit including electronic parts 15 for applying a signal voltage to the liquid crystal element 9. A lamp 16 serves as a light source, a light emitting portion thereof being opposed to the light intake portion 12a of the like transmissive member 12. A second circuit board 21 is secured to the first circuit board 17 by means of screws 19 or the like via mounting leg members 18 made of iron or the like and having a stepped configuration. The second circuit board 21 has mounted thereon a drive circuit including a connector 20 connected to an external battery (not shown) by way of a switch or the like and an electronic part 15 and so on. A lead wire 22 establishes electric connection between the first and second circuit boards 17 and 21. Rubber conductors 23, located in penetrating portions, for example through-holes 6a provided at peripheral portions of the securing member 6, serve as conducting members for establishing electric connection between the terminals of the electrodes of the liquid crystal element 9 and terminals of the first circuit board 17.

The liquid crystal element 9 includes a liquid crystal cell 24 and may, when necessary, include polaroid plates 25 and 26 applied to the front and rear faces of the liquid crystal cell for allowing polarized light of one directional component to pass therethrough. The liquid crystal cell 24 includes a front electrode substrate 27 formed from a transparent insulating plate and a first electrode 28 formed from a transparent conducting film to present a shape corresponding to indicia such as characters, numerals or graduations on an inner face of the electrode substrate 27. A rear electrode substrate 30 is formed from a transparent insulating plate and is held in a spaced relationship a predetermined distance away from the front electrode substrate 27 via a spacer 29. A second electrode 31, formed from a transparent conducting film or a reflecting metal film, is on an inner face of the rear electrode plate 30 in an opposing relationship to the first electrode 28. Liquid crystal 32 is enclosed between the front and rear electrode substrates 27, 30. Terminals 33, formed to extend from the electrodes 28 and 31 to be exposed externally, are located on the rear face of the front electrode substrate 27.

Display operations of the liquid crystal element 9 will now be described. It is assumed, for example, that the liquid crystal is P-type switch nematic liquid crystal which has dielectric anisotropy and wherein the distribution of the centers of gravity of molecules about longitudinal axes are arranged in a direction and extend in parallel with the electrode substrates 27 and 30 by orientation treatments of the inner faces of the electrode substrates 27 and 30. However, in the axial direction the orientation twisted about 90 degrees from the one electrode substrate 27 to the other electrode substrate 30. Meanwhile, it is assumed that the polaroid plates 25 and 26 are applied such that axial directions of polarization which allows polarized light to pass therethrough are perpendicular relative to each other. In this case, when no potential higher than a predetermined level appears across the electrodes 28 and 31 in response to a signal potential applied to the terminal 33, the liquid crystal maintains its initial molecular arrangement, and hence when light polarized into one directional component by the rear polaroid plate 26 passes through the liquid crystal cell 24, the polarization axis of the polarized light is twisted substantially by an angle of 90 degrees before the light reaches the front polaroid plate 25. Since the polarization axis of the polarized light and the polarization axis of the polaroid plate 25 thus coincide in direction with each other, the light can pass through the liquid crystal element 9, thereby presenting a non-indicating condition in which the liquid crystal element 9 looks uniformly bright. On the contrary, when a signal potential applied to the terminal 33 is higher than the predetermined level between predetermined overlapping portions of the electrodes 28 and 31, longitudinal axes of the molecules of a portion of the liquid crystal 32 between the portions of the electrodes 28 and 31 between which the potential appears become arranged in a direction perpendicular to the planes of the electrode substrates 27 and 30. Thus, as light polarized into one directional component by the rear polaroid plate 26 passes through the liquid crystal cell 24, it reaches the front polaroid plate 25 without the polarization axis of the polarized light being twisted. Accordingly, since the polarization axis of the polarized light and the polarization axis of the polaroid plate 25 now intersect perpendicularly, the light cannot pass through the liquid crystal element 9. As a result, a dark "figure" appears against a bright "ground" to positively indicate a predetermined indicium.

While the foregoing description has been given the assumption that light is transmitted through the liquid crystal element 9, that is, the liquid crystal element 9 is used as of a transmissive type, even if light is transmitted and reflected through the liquid crystal element 9, that is, the liquid crystal element 9 is used as a reflecting type, the same theory applies. In this case, after light has passed through the liquid crystal element 9, is reflected behind the liquid crystal element 9 and then passes through the liquid crystal element 9 again, and if the polaroid plates 25 and 26 are applied to establish parallel relationship between the directions of the polarization axes thereof, then a bright "figure" will appear against a dark "ground" to negatively indicate a predetermined indicium.

It is to be noted that the liquid crystal 32 may not only be nematic liquid crystal having a positive dielectric anisotropy but may also be cholesteric liquid crystal or otherwise an optically active substance, a two color pigment or the like may be added. Where a plurality of liquid crystal cells 24 of the so-called guest-host type which contains a two color pigment added thereto are disposed in layered relationship to constitute a liquid crystal element 9, the polaroid plates 25 and 26 can be omitted.

Description will now be given of the assembly operations of the components described above.

The light transmissive member 12 disposed on the heat radiating member 13 is placed on the front face of the securing member 6 with the heat radiating member 13 located forwardly of the light transmissive member 12. The heat insulating member 11 and the reflecting plate 10 are then placed in position on the heat radiating member 13. The liquid crystal element 9 is placed on the reflecting plate 10, and then the cell holder 8 for contacting at least the peripheral portions of the liquid crystal element 9 to hold the crystal element 9 against the securing member 6 is placed on the liquid crystal element and is secured to the securing member 6 by means of screws or by some other suitable means.

Thereafter, the securing member 6 is inverted, and the rubber conductors 23 are disposed in the through-holes 6a formed at peripheral portions of the securing member 6. Consequently, forward ends of the rubber conductors 23 come into contact with the terminals 33 of the liquid crystal cell 24 which extend rearwardly within the through-holes 6a.

Then, the first circuit board 17, on which the electronic parts 15, the lamp 16 and so on are placed, and the second circuit board 21, on which the connector 20 and so on are placed, are disposed on front bent portions 18a and rear bent portions 18b of the mounting leg members 18 respectively, and the circuit board 17 is secured to the rear face of the securing member 6 by means of screws 14. Consequently, the rear ends of the rubber conductors 23 come into contact with terminals (not shown) which are provided on the first circuit board 17 and which extend forwardly within the through-holes 6a.

Thus, the assembly operation of the liquid crystal display device 3 is completed. Then, the liquid crystal display device 3 is put into and secured, to the meter case 2, and the mask plate 4 and the front panel 5 are mounted in front of the meter case 2, thereby completing the liquid crystal meter apparatus 1 for a car.

In this manner, in the liquid crystal display device 3, only if the light transmissive member 12, heat radiating member 13, heat insulating member 11, reflecting plate 10, liquid crystal element 9 and rubber conductors 23 are put one above another and are disposed or placed one after another in layered relationship on the securing member 6 as a foundation piece for assembly as described above, then when assembly of the entire device is completed, the individual components are automatically placed in position relative to each other. Then, if the cell holder 8 and the circuit board 17 are assembled to the securing member 6 from forwardly and rearwardly thereof, all the components can be secured in integral relationship. Thus, since the assembly operation is simplified remarkably compared with that of a conventional structure (wherein before each component is assembled its position relative to the other components must be checked), the skill of an operator and the time required for such assembly can be reduced, and hence the productivity of an assembly operation can be improved greatly.

Particularly, since the rubber conductors 23 for establishing electric connection between the liquid crystal cell 24 of the liquid crystal element 9 and the circuit board 17 can be positioned only by placing them into the through-holes 6a formed in the securing member 6 while preventing, at the same time, displacement or deformation of the rubber conductors 23, they can be accurately and easily set in position without taking any care, and they can provide a structure which is resistant to external vibrations.

It is to be noted that an alternate construction is also possible wherein the through-holes 6a as the penetrating portions are replaced by pentrating cutaway recesses formed by cutting away peripheral portions of the securing member 6. After the rubber conductors 23 are placed in the penetrating cutaway recesses, the cell holder 8 is secured to the securing member 6 so that side faces of the rubber conductors 23 are positioned by the securing member 6 and the cell holder 8.

Further, in comparison with the other structure wherein the light transmissive member 12 is used as a foundation piece for assembly, the light transmissive member 12 of the device of the present invention can be reduced in thickness. Accordingly the liquid crystal meter apparatus 1 can be made thinner. Thus, since the mounting space in an inner panel or the like of a vehicle may be restricted, assembly can be effected more easily. Further, since the configuration of the light transmissive member 12 can be made simpler , the design and manufacture of a metal mold can become easier, and thus it is possible to provide a configuration which provides uniform illumination, which is an essential role of the light transmissive member 12.

Besides, since the thickness of the light transmissive member 12 is reduced, the distance between the liquid crystal cell 24 of the liquid crystal element 9 and the circuit board 17 is also reduced, and hence the size of the rubber conductors 23 in the back and forth direction is also reduced. Accordingly, deformation of the rubber conductors 23 in lateral directions upon assembly can be made smaller than ever, and hence the terminals 33 of the liquid crystal cell 24 and the terminals of the circuit board 17 opposing to the terminals 33 can be reduced in pitch. As a result, the electrodes 28 and 31 provided on the liquid crystal cell 24 can be increased in number correspondingly, and hence a greater number of indicia can be provided on the liquid crystal cell 24 having the same area, allowing the liquid crystal display device 3 to provide various and complicated indications.

Moreover, in a conventional arrangement the lamp 16 for illuminating the liquid crystal element 9 cannot be disposed so near to the liquid crystal element 9 otherwise heat generated by the lamp 16 may cause an irregular arrangement of molecules of the liquid crystal 32 and hence the illuminating efficiency will be low. However, in the preferred embodiment of the present invention, since the heat radiating member 13 made of a material having a high heat conduction is interposed between the liquid crystal element 9 and the lamp 16, heat generated by the lamp 16 is prevented from advancing forwardly by the heat radiating member 13 and is radiated well from the portions exposed outwardly to prevent transmission of heat to the liquid crystal element 9, thereby assuring maintenance of the stable molecular arrangement of the liquid crystal 32. In this case, if the outwardly exposed portions of the heat radiating member 13 have an uneven configuration having a greater surface area, the heat radiating effect can be further improved.

Accordingly, the lamp 16 need not be spaced far away from the liquid crystal element 9, and hence the thickness of the liquid crystal display device 3 can be made even thinner.

Further, since in the embodiment described above the heat radiating member 13 substantially covers the front faces and the side faces of the light transmissive member 12 and the lamp 16 which serve as an illuminating member, light is transmitted via the opening 13a of the heat radiating member 13 from the front face of the light transmissive member 12 opposing the indicating portions of the liquid crystal element 9, while light is not transmitted from the front face of the light transmissive member 12 opposing the other portions of the liquid crystal element 9 which do not contribute to indications since the light is intercepted by the heat radiating member 13 and is returned to the interior of the light transmissive member 12 again. Thereafter it is respectively reflected by surrounding portions of the light transmissive member 12 until it goes out from the opening 13a of the heat radiating member 13. Accordingly, the heat radiating member 13 serves as a mask for the light transmissive member 12 and also as a reflecting member so that light is not transmitted to portions of the liquid crystal element 9 , requiring no illumination. The light can be used instead as light for illuminating portions of the liquid crystal element requiring such illumination and hence the illuminating efficiency can be improved. In this case, if the inner face of the heat radiating member 13, that is, a face of the heat radiating member 13 opposing the light transmissive member 12, is treated to improve its reflectivity, such as by application of a white paint, the illuminating efficiency can be improved further.

It is to be noted that side faces of the light transmissive member 12 may be surrounded by a silver tape or the like if necessary or may have nothing applied thereto, and in such a case, the side faces of the light transmissive member 12 need not be covered by the heat radiating member 13.

Meanwhile, since the securing member 6 serving as a foundation piece for assembly of component parts is in the form of a bottomed box, its vibration resisting property is improved so that it can stably hold the liquid crystal element 9 and so on contained therein.

Besides, since the light transmissive element 12 is located just above a bottom 6b of securing member 6, if the inner face of the bottom 6b, that is, the face opposing to the light transmissive member 12, is treated to improve its reflectivity, such as by application of a white paint, the securing member 6 is additionally provided with an action as a reflecting member which is conventionally provided by a separate member located on the rear face of the light transmissive member 12, resulting in improvement in the illuminating effeciency.

In addition, since the front bent portions 18a of the mounting leg members 18 bear against the rear face of the circuit board 17 along the direction of disposition of the rubber conductors 23, deformation of the circuit board 17 by a reactive force of the rubber conductors 23 can be prevented, and hence good electrical connection can be maintained.

As apparent from the foregoing description, according to the present invention, the assembly of component parts can be effected easily and accurately, and the liquid crystal display device can have a strong structure resistant to external vibrations while the configuration of the light transmissive member can be simplified, thus facilitating manufacture and modification. Moreover, since the thickness of the light transmissive member can be reduced, the entire thickness of a liquid crystal display device can also be reduced. Thus, the present invention can provide a liquid crystal display device which is convenient for use as display means in instruments of vehicles such as automobiles, motorcycles, and so on.

**Claims**

1.  A liquid crystal display device (3) comprising:
    a box-shaped securing member (6) serving as a foundation piece for assembly of the device and having a penetrating portion (6a) at a peripheral portion thereof;
    a liquid crystal element (9) in which the directions of arrangement of the molecules of the liquid crystal (32) vary in response to the application of signal potentials for controlling transmission of light to effect indication;
    a holding member (8), disposed on the side of said liquid crystal element (9) remote from said securing member (6), for holding said liquid crystal element (9) on said securing member (6);
    a circuit board (17), on which is provided a drive circuit (15) for outputting signal potentials for controlling said liquid crystal element (9), said circuit board (17) being disposed on the side of said securing member (6) remote from said liquid crystal element (9); and
    a conducting member (23);
    said circuit board (17) and holding member (8) being secured to said securing member (6) so that said conducting member (23) establishes electrical connection between said liquid crystal element (9) and said circuit board (17);
    characterised by an illuminating member (12) arranged on one side of said securing member (6), in layered relationship with said liquid crystal element (9), and said conducting member (23) being located in said penetrating portion (6a) of said securing member (6).

2. A liquid crystal display device (3) according to claim 1, wherein said illuminating member (12) is a light transmissive member in the form of a flat plate which takes in light from a light source (16) provided on said circuit board (17) through a light intake portion (12a) provided at least at a portion of a side face of said light transmissive member (12) and which transmits the light to said liquid crystal element (9).

3. A liquid crystal display device (3) according to claim 2, wherein said securing member (6) serves as a foundation piece for said light transmissive member (12) and said light source (16) so that when said light transmissive member (12) and said circuit board (17) are disposed on said securing member (6), a light emitting portion of said light source (16) opposes the light intake portion (12a) of said light transmissive member (12).

4. A liquid crystal display device according to claim 2 or 3, wherein said light transmissive member (12) is positioned by said securing member (6) and a heat radiating member (13), made of a material having a high heat conduction, is interposed between the liquid crystal element (9) and the light transmissive member (12), said heat radiating member (13) covering the face of said light transmissive member (12) and having portions cut away in correspondence with indicating portions of said liquid crystal element (9) while another portion thereof is exposed outwardly towards said securing member (6).

5. A liquid crystal display device according to claim 4, wherein said heat radiating member (13) has disposed on the face thereof remote from said light source (16) a heat insulating member (11) which is cut away at portions thereof in correspondence with the indicating portions of said liquid crystal element (9).

6. A liquid crystal display device according to any one of claims 1 to 5, which further comprises a semitransmissive reflecting plate (10) located on the face of said liquid crystal element (9) adjacent said securing element (6) and including a filter element which is colored corresponding to the indicating portions of said liquid crystal element (9).

7. A liquid crystal display device according to any one of claims 1 to 6, wherein said penetrating portion (6a) is a through-hole formed at a peripheral portion of said securing member (6).

**Revendications**

1. Dispositif d'affichage à cristal liquide (3) comportant :

un élément de fixation en forme de boîte (6) servant de pièce de support pour l'ensemble du dispositif et ayant une partie de pénétration (6a) sur une partie périphérique de celui-ci;

un élément à cristal liquide (9) dans lequel les directions d'agencement des molécules du cristal liquide (32) varient en réponse à l'application de potentiels de signal afin de commander la transmission de la lumière de façon à effectuer une indication;

un élément de maintien (8), disposé sur le côté dudit élément à cristal liquide (9) éloigné dudit élément de fixation (6), afin de maintenir ledit élément à cristal liquide (9) sur ledit élément de fixation (6);

un circuit imprimé (17), sur lequel est prévu un circuit de commande (15) destiné à délivrer des potentiels de signal afin de commander ledit élément à cristal liquide (9), ledit circuit imprimé (17) étant disposé sur le côté dudit élément de fixation (6) éloigné dudit élément à cristal liquide (9); et

un élément conducteur (23);

ledit circuit imprimé (17) et ledit élément de maintien (8) étant fixés audit élément de fixation (6) de telle sorte que ledit élément conducteur (23) établit une connexion électrique entre ledit élément à cristal liquide (9) et ledit circuit imprimé (17);

caractérisé par un élément d'éclairage (12) disposé sur un côté dudit élément de fixation (6), en relation stratifiée avec ledit élément à cristal liquide (9), et ledit élément conducteur (23) étant disposé dans ladite partie de pénétration (6a) dudit élément de fixation (6).

2. Dispositif d'affichage à cristal liquide (3) selon la revendication 1, dans lequel ledit élément d'éclairage (12) est un élément de transmission de la lumière sous la forme d'une plaque plate qui prélève la lumière sur une source de lumière (16) prévue sur ledit circuit imprimé (17) à travers une partie d'entrée de lumière (12a) prévue au moins au niveau d'une partie d'une face latérale dudit élément de transmission de la lumière (12) et qui transmet la lumière vers ledit élément à cristal liquide (9).

3. Dispositif d'affichage à cristal liquide (3) selon la revendication 2, dans lequel ledit élément de fixation (6) sert de pièce de support pour ledit élément de transmission de la lumière (12) et ladite source de lumière (16) de telle sorte que lorsque ledit élément de transmission de la lumière (12) et ledit circuit imprimé (17) sont disposés sur ledit élément de fixation (6), une partie d'émission de lumière de ladite source de lumière (16) s'oppose à la partie d'entrée de lumière (12a) dudit élément de transmission de la lumière (12).

4. Dispositif d'affichage à cristal liquide selon l'une des revendications 2 ou 3, dans lequel ledit élément de transmission de la lumière (12) est positionné par ledit élément de fixation (6) et un élément de rayonnement de la chaleur (13), réalisé en un matériau ayant une conductibilité élevée de la chaleur, est interposé entre l'élément à cristal liquide (9) et l'élément de transmission de la lumière (12), ledit élément de rayonnement de la chaleur (13) recouvrant la face dudit élément de transmission de la lumière (12) et ayant des parties arrachées en correspondance avec des parties d'indication dudit élément à cristal liquide (9) alors qu'une autre partie celui-ci est exposée à l'extérieur en direction dudit élément de fixation (6).

5. Dispositif d'affichage à cristal liquide selon la revendication 4, dans lequel ledit élément de rayonnement de la chaleur (13) possède un élément thermiquement isolant (11) disposé sur la face de celui-ci éloignée de ladite source de lumière (16) et qui est arraché au niveau de parties de celui-ci en correspondance avec les parties d'indication dudit élément à cristal liquide (9).

6. Dispositif d'affichage à cristal liquide selon l'une quelconque des revendications 1 à 5, qui comporte, en outre, une plaque réfléchissante semi-transparente (10) disposée sur la face dudit élément à cristal liquide (9) contiguë audit élément de fixation (6) et comprenant un filtre qui est coloré de manière correspondant aux parties d'indication dudit élément à cristal liquide (9).

7. Dispositif d'affichage à cristal liquide selon l'une quelconque des revendications 1 à 6, dans lequel ladite partie de pénétration (6a) est un trou débouchant formé au niveau d'une partie périphérique dudit élément de fixation (6).

**Patentansprüche**

1. Flüssigkristallanzeigevorrichtung (3) mit einem kastenförmigen Befestigungselement (6), das als Fundamentteil für den Zusammenbau der Vorrichtung dient und ein Durchdringungsteil (6a) an seinem Umfang besitzt,

   einem Flüssigkristallelement (9), in dem sich die Anordnungsrichtungen der Moleküle des Flüssigkristalls (32) als Funktion der Einspeisung von Signalpotentialen zur Steuerung der Lichtübertragung für eine Anzeige ändern, einem Halterungselement (8), das auf der vom Befestigungselement (6) abgewandten Seite des Flüssigkristallelementes (9) angeordnet ist und das Flüssigkristallelement (9) auf dem Befestigungselement (6) hält, einer Schaltungsplatte (17), auf der eine Treiberschaltung (15) zur Ausgabe von Signalpotentialen für die Steuerung des Flüssigkristallelementes (9) vorgesehen ist und die auf der vom Flüssigkristallelement (9) abgewandten Seite des Befestigungselementes (6) angeordnet ist, und einem leitenden Element (23),

   wobei die Schaltungsplatte (17) und das Halterungselement (8) am Befestigungselement (6) derart befestigt sind, daß das leitende Element (23) eine elektrische Verbindung zwischen dem Flüssigkristallelement (9) und der Schaltungsplatte (17) bildet,

   **gekennzeichnet durch** ein Beleuchtungselement (12), das auf einer Seite des Befestigungselementes (6) beschichtet mit dem Flüssigkristallelement (9) angeordnet ist, und durch eine Anordnung des leitenden Elementes (23) im Durchdringungsteil (6a) des Befestigungselementes (6).

2. Flüssigkristallanzeigevorrichtung (3) nach Anspruch 1, bei welcher das Beleuchtungselement (12) ein Licht übertragendes Element in Form einer ebenen Platte ist, das Licht von einer auf der Schaltungsplatte (17) vorgesehenen Lichtquelle (16) durch ein an wenigstens einem Teil einer Seitenfläche des Licht übertragenden Elementes (12) vorgesehenes Lichtaufnahmeteil (12a) aufnimmt und das Licht zum Flüssigkristallelement (9) überträgt.

3. Flüssigkristallanzeigevorrichtung (3) nach Anspruch 2, bei der das Befestigungselement (6) als Fundamentteil für das Licht übertragende Element (12) und die Lichtquelle (16) derart dient, daß bei Anordnung des Licht übertragenden Elementes (12) und der Schaltungsplatte (17) auf dem Befestigungselement (6) ein Licht aussendender Teil der Lichtquelle (16) dem Lichtaufnahmeteil (12a) des Lichtübertragungselementes (12) gegenübersteht.

4. Flüssigkristallanzeigevorrichtung nach Anspruch 2 oder 3, bei der das Licht übertragende Element (12) durch das Befestigungselement (6) in seiner Lage eingestellt ist und ein aus einem Material mit hoher Wärmeleitfähigkeit hergestelltes Wärmestrahlungselement (13) zwischen dem Flüssigkristallelement (9) und dem Licht übertragenden Element (12) angeordnet ist, wobei das Wärmestrahlungselement (13) die Fläche des Lichtübertragungselementes (12) abdeckt und Teile besitzt, welche entsprechend den Anzeigeteilen des Flüssigkristallelementes (9) weg geschnitten ist, während ein anderer Teil nach außen gegen das Befestigungselement (6) frei liegt.

5. Flüssigkristallanzeigevorrichtung nach Anspruch 4, bei der das Wärmestrahlungselement (13) auf der von der Lichtquelle (16) entfernten Fläche ein Wärmeisolationselement (11) aufweist, das an Stellen entsprechend den Anzeigeteilen des Flüssigkristallelementes (9) weg geschnitten ist.

6. Flüssigkristallanzeigevorrichtung nach den Ansprüchen 1 bis 5 mit einer halbdurchlässigen Reflektorplatte (10), welche auf der dem Befestigungselement (6) benachbarten Fläche des Flüssigkristallelementes (9) angeordnet ist und ein Filterelement enthält, das entsprechend den Anzeigeteilen des Flüssigkristallelementes (9) gefärbt ist.

7. Flüssigkristallanzeigevorrichtung nach den Ansprüchen 1 bis 6, bei der das Durchdringungsteil (6a) ein an einem Umfangsteil des Befestigungselementes (6) vorgesehenes Durchgangsloch ist.

Fig.1

Fig. 7

Fig. 2

Fig.3

# Fig.4

# Fig.5

Fig.6

EP 0 167 368 B1